# EUROPEAN PATENT SPECIFICATION

(11) **EP 3 220 691 B1**
(45) Date of publication and mention of the grant of the patent: **12.05.2021**
(21) Application number: 15859554.6
(22) Date of filing: 17.08.2015
(51) Int. Cl.: H04W 24/02, H04W 84/00, H04W 84/04, H04W 24/08

(54) **NETWORK NODE SELECTION AND ACTIVATION METHOD AND APPARATUS**
NETZWERKKNOTENAUSWAHL UND AKTIVIERUNGSVERFAHREN UND -VORRICHTUNG
PROCÉDÉ ET APPAREIL DE SÉLECTION ET D'ACTIVATION DE NOEUD DE RÉSEAU

(30) Priority: 13.11.2014 CN 201410638100
(43) Date of publication of application: 20.09.2017
(73) Proprietor: ZTE Corporation, Shenzhen City, Guangdong 518057 (CN)
(72) Inventor: MIAO, Ting, Shenzhen Guangdong 518057 (CN); YU, Guanghui, Shenzhen Guangdong 518057 (CN); LIU, Xing, Shenzhen Guangdong 518057 (CN); LI, Ruimei, Shenzhen Guangdong 518057 (CN)
(74) Representative: Novagraaf Technologies
(86) International application number: PCT/CN2015/087273
(87) International publication number: WO 2016/074515

(56) References cited:
- WO-A2-2010/080013
- CN-A- 1 596 023
- CN-A- 103 686 946
- US-A1- 2006 092 879
- US-A1- 2012 142 328
- US-A1- 2013 308 520
- US-A1- 2014 269 417

## Description

### Technical Field

The present disclosure relates to the field of communications, and in particular to a network node selection method and apparatus and a network node activation method and apparatus.

### Background

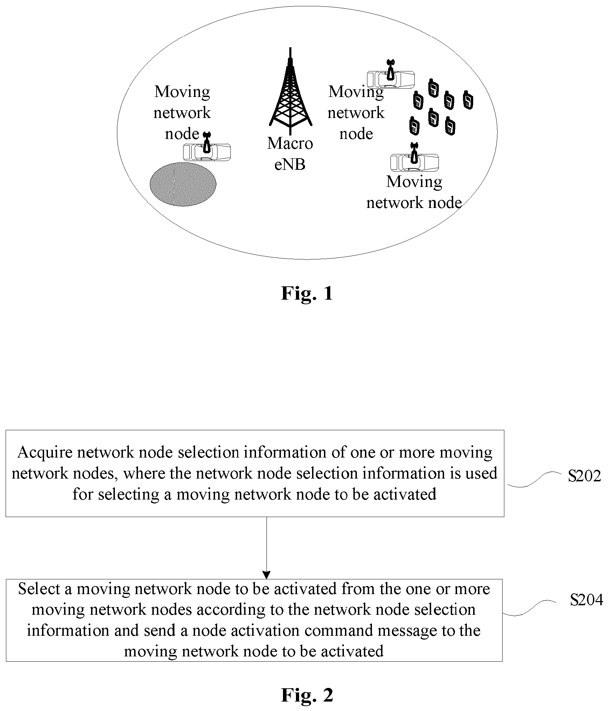

With the rapid development of cellular network mobile communications, the number of mobile users increases dramatically, and mobile traffic is likely to be gradually multiplied by 1000 times in future. Apart from the dramatic increase of users, the demand for high-rate services also contributes to the huge increase of mobile traffic, for example, data services such as multimedia and video stream put forward a relatively higher requirement on the performance of future networks. The improvement on user experience is absolutely accompanied by a higher requirement on the coverage and capacity of a network. Fig. 1 is a schematic diagram illustrating a mobile network according to a related communication technology. As shown in Fig. 1, because of the complexity and the variability of radio environments, the requirements of terminals on coverage and capacity cannot be met merely by an underlying overlay network. The underlying overlay network herein may refer to a network providing a basic coverage, for example, the macro base station (e.g., NodeB or eNB) shown in Fig. 1. Ultra Density Network (UDN) will serve as an effective solution to the coverage and capacity problem existing in future mobile communications. For example, sites may be arranged in an urban agglomeration or in offices to enhance the coverage of a network and increase the capacity of the network. However, the deployment of UDNs leads to an increase in the construction cost and maintenance cost of the network. Device to Device (D2D) communication, which is also an effective solution to the network coverage and capacity stress existing in future mobile communications, achieves wider network coverage through relays of terminals on an underlying overlay network so as to reduce the load of the underlying network. However, D2D is limited in coverage range as well as coverage and capacity unloading.

In a related communication technology, another solution to coverage and capacity boosting is the use of a Moving Network (MN), which is used to enhance and expand the coverage and capacity of an existing underlying overlay network. An underlying overlay network can activate a moving network node in an MN to provide coverage according to the coverage and capacity of a network and service requirements. The moving network node can effectively relieve the problems of a weak-coverage region and an overloaded region in an underlying overlay network. However, because a moving network node has defects such as irregular movement and uncertain residing time, the stability of a network is undermined, and the utilization rate of network resources is low, which is unfavorable to the improvement of the overall performance of the network.

In conclusion, a solution to the selection of a proper moving network node is not provided in a related communication technology.

The related documents US 2013/0308520 A1, WO 2010080013 A2, US 2014/0269417 A1 and US 2012/0142328 A1 provide respective solutions. However, the above mentioned problem still remains unsolved.

### Summary

The invention is defined in the appended set of claims.

A network node selection method and apparatus and a network node activation method and apparatus are provided in some embodiments of the present disclosure to at least address the problem that the selection of a proper moving network node is unachievable in a related communication technology.

In accordance with an embodiment of the present disclosure, a network node selection method is provided.

The network node selection method provided in the embodiment of the present disclosure may include the following acts. Network node selection information of one or more moving network nodes is acquired, and the network node selection information is used for selecting a moving network node to be activated. A moving network node to be activated is selected from the one or more moving network nodes according to the network node selection information and a node activation command message is sent to the moving network node to be activated.

In an exemplary embodiment, the act of acquiring the network node selection information of the one or more moving network nodes may include at least one of the following acts. The network node selection information reported by the one or more moving network nodes when the one or more moving network nodes are powered on is received. A network information inquiry request is sent to the one or more moving network nodes and the network node selection information reported by the one or more moving network nodes according to the network information inquiry request is received.

In an exemplary embodiment, the network node selection information may include at least one of:
position information of the one or more moving network nodes, where the position information may refer to information indicating a position where each moving network node currently resides;
tolerable residing time of the one or more moving network nodes, where the tolerable residing time indicates time elapsing from a moment each moving network node receives a network information inquiry request to a moment the moving network node leaves a current position or time elapsing from a moment each moving network node initiatively sends the network node selection information to a moment the moving network node leaves a current position;
coverage range of the one or more moving network nodes, where the coverage range may refer to a maximum coverage distance each moving network node is able to provide in a current position under a specific transmitting power or a maximum transmitting power;
wireless access information of the one or more moving network nodes, where the wireless access information indicates a type of an access network which is able to be provided by each moving network node; or
moving network node identification information of the one or more moving network nodes.

In an exemplary embodiment, operational parameter information of the moving network node to be activated may be carried in the node activation command message, and the operational parameter information may include:
transmitting power of the moving network node to be activated;
running time of the moving network node to be activated, where the running time indicates how long the moving network node to be activated is expected to run normally after receiving the node activation command message; and
a movement area of the moving network node to be activated, where the movement area is a position area in which the moving network node to be activated is expected to run normally after receiving the node activation command message.

In an exemplary embodiment, the one or more moving network nodes may be network sites changeable in position.

In accordance with another embodiment of the present disclosure, a network node activation method is provided.

The network node activation method provided in the embodiment of the present disclosure may include the following acts. Network node selection information is sent to an underlying network site, and the network node selection information is used by the underlying network site for selecting a moving network node to be activated. A node activation command message is received from the underlying network site and an activating operation is performed according to the node activation command message.

In an exemplary embodiment, the act of sending the network node selection information to the underlying network site may include one of the following acts. The network node selection information is reported, at a power-on moment, to the underlying network site. The network node selection information is reported to the underlying network site in response to a network information inquiry request sent by the underlying network site.

In an exemplary embodiment, the act of performing the activating operation according to the node activation command message may include the following acts. Operational parameter information is acquired from the node activation command message. The operational parameter information may include one or more of: transmitting power of the moving network node to be activated, running time of the moving network node to be activated, and a movement area of the moving network node to be activated. The moving network node to be activated in the running time range using the transmitting power according to the operational parameter information is activated.

In an exemplary embodiment, after acquiring the operational parameter information from the node activation command message, the method may further include the following acts. It is determined that a current position is outside of the movement area, where the movement area is a position area in which the moving network node to be activated is expected to run normally after receiving the node activation command message. A notification message is sent to the underlying network site to notify the underlying network site that the current position is outside of the movement area.

In an exemplary embodiment, the underlying network site may be a communication site which provides underlying network coverage and whose network site position keeps unchanged.

In accordance with still another embodiment of the present disclosure, a network node selection apparatus is provided.

The network node selection apparatus provided in the embodiment of the present disclosure includes: an acquisition module arranged to acquire network node selection information of one or more moving network nodes, where the network node selection information is used for selecting a moving network node to be activated; and a selection module arranged to select a moving network node to be activated from the one or more moving network nodes according to the network node information and send a node activation command message to the moving network node to be activated.

In an exemplary embodiment, the acquisition module may be arranged to acquire the network node selection information of the one or more moving network nodes in one of the following ways: the acquisition module is arranged to receive the network node selection information reported by the one or more moving network nodes when the one or more moving network nodes are powered on; or the acquisition module is arranged to send a network information inquiry request to the one or more moving network nodes and receive the network node selection information reported by the one or more moving network nodes according to the network information inquiry request.

In an exemplary embodiment, the network node selection information may include at least one of:
position information of the one or more moving network nodes, where the position information may refer to information indicating a position where each moving network node currently resides;
tolerable residing time of the one or more moving network nodes, where the tolerable residing time indicates time elapsing from a moment each moving network node receives a network information inquiry request to a moment the moving network node leaves a current position or time elapsing from a moment each moving network node initiatively sends the network node selection information to a moment the moving network node leaves a current position;
coverage range of the one or more moving network nodes, where the coverage range may refer to a maximum coverage distance each moving network node is able to provide in a current position under a specific transmitting power or a maximum transmitting power;
wireless access information of the one or more moving network nodes, where the wireless access information indicates a type of an access network which is able to be provided by each moving network node; or
moving network node identification information of the one or more moving network nodes.

In an exemplary embodiment, operational parameter information of the moving network node to be activated may be carried in the node activation command message, and the operational parameter information may include:
transmitting power of the moving network node to be activated; running time of the moving network node to be activated, where the running time indicates how long the moving network node to be activated is expected to run normally after receiving the node activation command message; and
a movement area of the moving network node to be activated, where the movement area is a position area in which the moving network node to be activated is expected to run normally after receiving the node activation command message.

In an exemplary embodiment, the one or more moving network nodes may be network sites changeable in position.

In accordance with yet still another embodiment of the present disclosure, a network node activation apparatus is provided.

The network node activation apparatus provided in the embodiment of the present disclosure includes: a sending module arranged to send network node selection information to an underlying network site, where the network node selection information is used by the underlying network site for selecting a moving network node to be activated; and an activation module arranged to receive a node activation command message from the underlying network site and perform an activating operation according to the node activation command message.

In an exemplary embodiment, the sending module may be arranged to send the network node selection information to the underlying network site in one of the following ways: the sending module is arranged to report, at a power-on moment, the network node selection information to the underlying network site; or the sending module is arranged to report the network node selection information to the underlying network site in response to a network information inquiry request sent by the underlying network site.

In an exemplary embodiment, the activation module may include: an acquisition unit arranged to acquire operational parameter information from the node activation command message, where the operational parameter information includes one or more of: transmitting power of the moving network node to be activated, running time of the moving network node to be activated, and a movement area of the moving network node to be activated; and an activation unit arranged to activate the moving network node to be activated in the running time range using the transmitting power according to the operational parameter information.

In an exemplary embodiment, the activation module may further include: a determination unit arranged to determine that a current position is outside of the movement area, where the movement area is a position area in which the moving network node to be activated is expected to run normally after receiving the node activation command message; and a notification unit arranged to send a notification message to the underlying network site to notify the underlying network site that the current position is outside of the movement area.

In an exemplary embodiment, the underlying network site may be a communication site which provides underlying network coverage and whose network site position keeps unchanged.

In the embodiments of the present disclosure, network node selection information of one or more moving network nodes is acquired, where the network node selection information is used for selecting a moving network node to be activated, the moving network node to be activated is selected from the one or more moving network nodes according to the network node information, and a node activation command message is sent to the moving network node to be activated. In this way, the problem that the selection of a proper moving network node is unachievable in a related communication technology is addressed. As a result, the resources of a moving network node are fully used, the stability of the moving network node is enhanced, the utilization rate of network resources is increased, and the coverage scale and the overall throughout of a network are increased.

### Brief Description of the Drawings

The accompanying drawings described herein which are incorporated into and form a part of the application are provided for the better understanding of the present disclosure. In the accompanying drawings:
Fig. 1 is a schematic diagram illustrating a mobile network according to a related communication technology;
Fig. 2 is a flowchart of a network node selection method according to an embodiment of the present disclosure;
Fig. 3 is a flowchart of a network node activation method according to an embodiment of the present disclosure;
Fig. 4 is a flowchart illustrating the node selection at an underlying network site performed when a moving network node is powered on according to an exemplary embodiment of the present disclosure;
Fig. 5 is a flowchart illustrating the sending of a network information inquiry request from an underlying network site to a moving network node for the selection of a node according to an exemplary embodiment of the present disclosure;
Fig. 6 is a flowchart illustrating the node reselection at an underlying network site performed when a moving network node moves according to an exemplary embodiment of the present disclosure;
Fig. 7 is a flowchart illustrating the node selection at an underlying network site according to the network node selection history information of a moving network node provided in an exemplary embodiment of the present disclosure;
Fig. 8 is a block diagram illustrating the structure of a network node selection apparatus according to an embodiment of the present disclosure;
Fig. 9 is a block diagram illustrating the structure of a network node activation apparatus according to an embodiment of the present disclosure; and
Fig. 10 is a block diagram illustrating the structure of a network node activation apparatus according to an exemplary embodiment of the present disclosure.

### Detailed Description of the Embodiments

The present disclosure will be described below in detail with reference to accompanying drawings when read in conjunction with specific embodiments. It should be noted that the embodiments of the present disclosure and the features thereof can be combined with each other if no conflict is caused.

Fig. 2 is a flowchart of a network node selection method according to an embodiment of the present disclosure. As shown in Fig. 2, the method may include the following acts S202 and S204.

At act S202, network node selection information of one or more moving network nodes is acquired. The network node selection information is used for selecting a moving network node to be activated.

At act S204, a moving network node to be activated is selected from the one or more moving network nodes according to the network node selection information and a node activation command message is sent to the moving network node to be activated.

No solution to the selection of a proper moving network node is provided in a related communication technology. According to the method shown in Fig. 2, an underlying network site acquires the network node selection information of one or more moving network nodes, selects a moving network node to be activated, and then sends a node activation command message to the moving network node to be activated. In this way, the problem that the selection of a proper moving network node is unachievable in a related communication technology is addressed. As a result, the resources of a moving network node are fully used, the stability of the moving network node is enhanced, the utilization rate of network resources is increased, and the coverage scale and the overall throughout of a network are increased.

In an exemplary implementation process, the one or more moving network nodes may be network sites changeable in position, for example, a vehicle-mounted relay station.

In an exemplary embodiment, in act S202, the network node selection information of the one or more moving network nodes may be acquired in any one of the following two ways.

In a first way, the network node selection information reported by the one or more moving network nodes is received when the one or more moving network nodes are powered on.

In a second way, a network information inquiry request is sent to the one or more moving network nodes, and the network node selection information reported by the one or more moving network nodes according to the network information inquiry request is acquired.

That is, a moving network node may directly send network node selection information to the underlying network site when the moving network node is powered on. Alternatively, after receiving a network information inquiry request sent from the underlying network site, a moving network node may report the network node selection information of the moving network node in response to the network information inquiry request.

The network information inquiry request message may refer to a search request sent by the underlying network site to acquire the network attribute information of a moving network node. The search request may include: the information the underlying network site requests a moving network node to report for the purpose of selecting a moving network node.

In an exemplary embodiment, the network node selection information may include, but is not limited to be, at least one of:
(1) position information of the one or more moving network nodes, the position information may refer to information, for example, longitude and latitude information, which indicates a position where each moving network node currently resides;
(2) tolerable residing time of the one or more moving network nodes, the tolerable residing time indicates time elapsing from a moment each moving network node receives a network information inquiry request to a moment the moving network node leaves a current position or time elapsing from a moment each moving network node initiatively sends the network node selection information to a moment the moving network node leaves a current position;
(3) coverage range of the one or more moving network nodes, the coverage range may refer to a maximum coverage distance each moving network node is able to provide in a current position under a specific transmitting power or a maximum transmitting power;
(4) wireless access information of the one or more moving network nodes, the wireless access information indicates a type of an access network which is able to be provided by each moving network node, for example, Global System for Mobile Communications (GSM), Universal Mobile Telecommunications System (UMTS), Long Term Evolution (LTE), Long Term Evolution-Advanced (LTE-A), and Wireless Local Area Network (WLAN); and
(5) moving network node identification information of the one or more moving network nodes.

In an exemplary embodiment, operational parameter information of the moving network node to be activated may be carried in the node activation command message, and the operational parameter information may include but is not limited to be:
(1) transmitting power of the moving network node to be activated;
(2) running time of the moving network node to be activated, the running time indicates how long the moving network node to be activated is expected to run normally after receiving the node activation command message, the running time is provided for reference by a moving network node so that the moving network node can determine how long the moving network node should run to meet the requirement of the underlying network site on coverage or capacity; and
(3) a movement area of the moving network node to be activated, the movement area is a position area in which the moving network node to be activated is expected to run normally after receiving the node activation command message.

In an exemplary implementation process, the operational parameter information may further include: moving network node identification information of the moving network node to be activated.

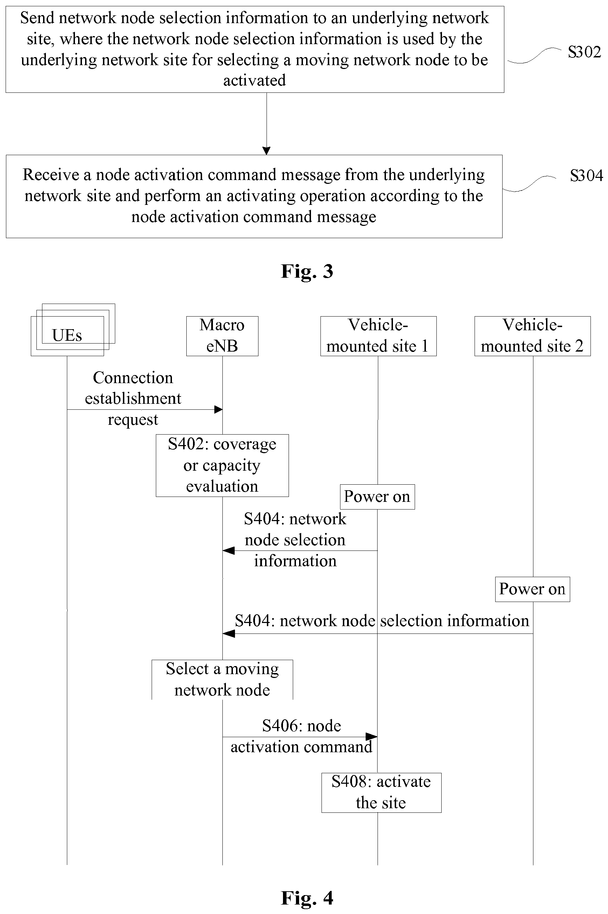

Fig. 3 is a flowchart of a network node activation method according to an embodiment of the present disclosure. As shown in Fig. 3, the method may include the following acts S302 and S304.

At act S302, network node selection information is sent to an underlying network site. The network node selection information is used by the underlying network site for selecting a moving network node to be activated.

At act S304, a node activation command message is received from the underlying network site and an activating operation is performed according to the node activation command message.

In an exemplary implementation process, the underlying network site may be a communication site which provides underlying network coverage and whose network site position keeps unchanged, for example, a macro eNB.

In an exemplary embodiment, in act S302, the network node selection information may be sent to the underlying network site in one of the following two ways.

In a first way, the network node selection information is reported, at a power-on moment, to the underlying network site.

In a second way, the network node selection information is reported to the underlying network site in response to a network information inquiry request sent by the underlying network site.

In an exemplary embodiment, in act 304, the act of performing the activating operation according to the node activation command message may include the following acts S1 and S2.

At act S1, operational parameter information is acquired from the node activation command message. The operational parameter information may include one or more of: transmitting power of the moving network node to be activated, running time of the moving network node to be activated, and a movement area of the moving network node to be activated.

At act S2, the moving network node to be activated in the running time range using the transmitting power according to the operational parameter information is activated.

In an exemplary embodiment, after act S1 of acquiring operational parameter information from the node activation command message, the method may further include the following acts S3 and S4.

At act S3, it is determined that a current position is outside of the movement area. The movement area is a position area in which the moving network node to be activated is expected to run normally after receiving the node activation command message.

At act S4, a notification message is sent to the underlying network site to notify the underlying network site that the current position is outside of the movement area.

In an exemplary embodiment, the movement area may generally refer to an area which is included in the service region of the underlying network site and in which coverage or capacity enhancement is needed.

The foregoing exemplary implementation process will be further described below with reference to several exemplary implementation modes.

### First exemplary embodiment

Fig. 4 is a flowchart illustrating the node selection at an underlying network site performed when a moving network node is powered on according to an exemplary embodiment of the present disclosure. As shown in Fig. 4, the flow may include the following acts S402 to S408.

At act S402, an underlying network site (e.g. a macro eNB) evaluates the capacity or coverage in the service area of a macro eNB according to the number of affiliated connected terminals in the service area of the macro eNB or the signal intensity and the positions of the terminals and determines a position range where capacity enhancement or coverage expansion is needed; and

At act S404, when powered on, a moving network node sends network node selection information to the underlying network site (e.g. a macro eNB) to which the position area of the moving network node belongs so as to notify the macro eNB of the newly added moving network node.

In the exemplary embodiment, the network node selection information may include, but is not limited to be, at least one of:
(1) the node identification information of the moving network node;
(2) the position information of the moving network node;
(3) the tolerable residing time of the moving network node;
(4) the coverage range of the moving network node; or
(5) the wireless access information of the moving network node.

The node identification information of the moving network node may refer to the identifier, for example, a NodeB ID1, of the moving network node (e.g. a vehicle-mounted site).

The position information of the moving network node may refer to information, for example, longitude and latitude information, which indicates a position where the moving network node currently resides.

The tolerable residing time of the moving network node indicates the time elapsing from the moment the moving network node initiatively sends network node selection information to the moment the moving network node leaves the current position.

The coverage range of a moving network node may refer to the maximum coverage distance the moving network node can provide when working at a current position and the maximum transmitting power of the moving network node.

The wireless access information of the moving network node may refer to the type of an access network the moving network node can provide, for example, GSM, UMTS, LTE, LTE-A, and WLAN.

At act S406, the macro eNB may perform an evaluation operation according to the network node selection information, for example, the position information, the coverage range and the wireless access information, reported by the vehicle-mounted site in combination with the weak-coverage or high-capacity position area included in the network of the macro base station and estimated in act S402. If the newly added vehicle-mounted site can increase the coverage or capacity of the network, then a node activation command is sent to the vehicle-mounted site.

The node activation command message may include, but is not limited to be: the operational parameter information of a moving network node, for example, transmitting power, the running time and the movement area of a moving network node, where the running time indicates how long a moving network node is expected to run normally after receiving the node activation command message from the underlying network site. The movement area is a position area in which the moving network node to be activated is expected to run normally after receiving the node activation command message. If the current position of the moving network node is not in the movement area, then the moving network node needs to notify the underlying network site of this situation.

At act S408, after receiving the node activation command from the macro eNB, the vehicle-mounted site may start running at the transmitting power included in the node activation command to provide a coverage or capacity.

### Second exemplary embodiment

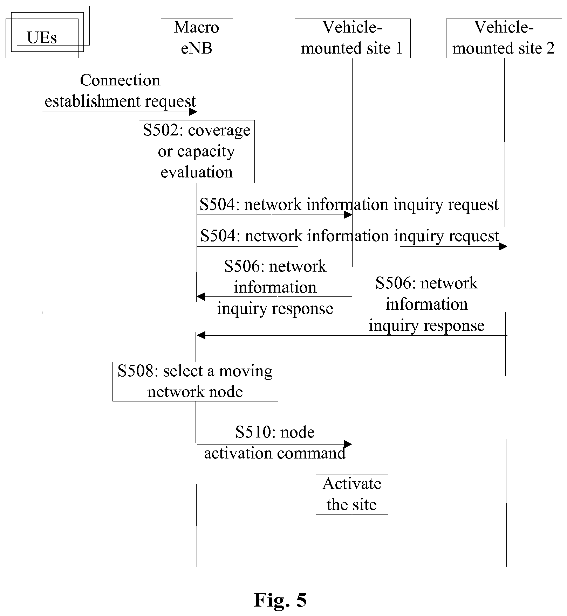

Fig. 5 is a flowchart illustrating the sending of a network information inquiry request from an underlying network site to a moving network node for the selection of a node according to an exemplary embodiment of the present disclosure. As shown in Fig. 5, the flow may include the following acts S502 to S510.

At act S502, an underlying network site (e.g. a macro eNB) evaluates the capacity or coverage in the service area of a macro eNB according to the number of affiliated connected terminals in the service area or the signal intensity and the positions of the terminals and determines a position range where capacity enhancement or coverage expansion is needed.

At act S504, the underlying network site (e.g. a macro eNB) sends a network information inquiry request message to one or more moving network nodes (e.g. vehicle-mounted sites 1 and 2) located in the service area of the macro eNB.

In an exemplary embodiment, the network information inquiry request message may refer to a search request sent by the underlying network site to acquire the network attribute information of a moving network node. The search request may include, but is not limited to be, at least one of:
(1) the position information of the moving network node;
(2) the tolerable residing time of the moving network node;
(3) the coverage range of the moving network node; and
(4) the wireless access information of the moving network node.

The position information of a moving network node may refer to information, for example, longitude and latitude information, which indicates a position where the moving network node currently resides.

The tolerable residing time of the moving network node indicates the time elapsing from the moment the moving network node receives an inquiry request from the underlying network site to the moment the moving network node leaves the current position.

The coverage range of a moving network node may refer to the maximum coverage distance the moving network node can provide when working at the current position and a specific transmitting power of the moving network node.

The wireless access information of the moving network node may refer to the type of an access network the moving network node can provide, for example, GSM, UMTS, LTE, LTE-A and WLAN.

At act S506, after receiving the network information inquiry request message from the macro eNB, the vehicle-mounted sites 1 and 2 send the position information, tolerable residing time, coverage range and wireless access information of the vehicle-mounted sites 1 and 2 to the macro eNB.

At act S508, the macro eNB may selectively activate the vehicle-mounted site 1 according to the information reported by the vehicle-mounted sites 1 and 2, the position range in which capacity enhancement or coverage expansion is needed according to the estimation of S502 and the type of the network. Certainly, a plurality of vehicle-mounted sites may be activated at the same time.

At act S510, the macro eNB sends a node activation command message to the vehicle-mounted site 1, and the vehicle-mounted site 1 runs at the transmitting power included in the node activation command to provide coverage or a capacity enhancement.

The node activation command message may include, but is not limited to be: the operational parameter information of a moving network node, for example, the transmitting power, the running time and the movement area of a moving network node, where the running time indicates how long a moving network node is expected to run normally after receiving the node activation command message from the underlying network site. The movement area is a position area in which the moving network node to be activated is expected to run normally after receiving the node activation command message. If the current position of the moving network node is not in the movement area, then the moving network node needs to notify the underlying network site of this situation.

### Third exemplary embodiment

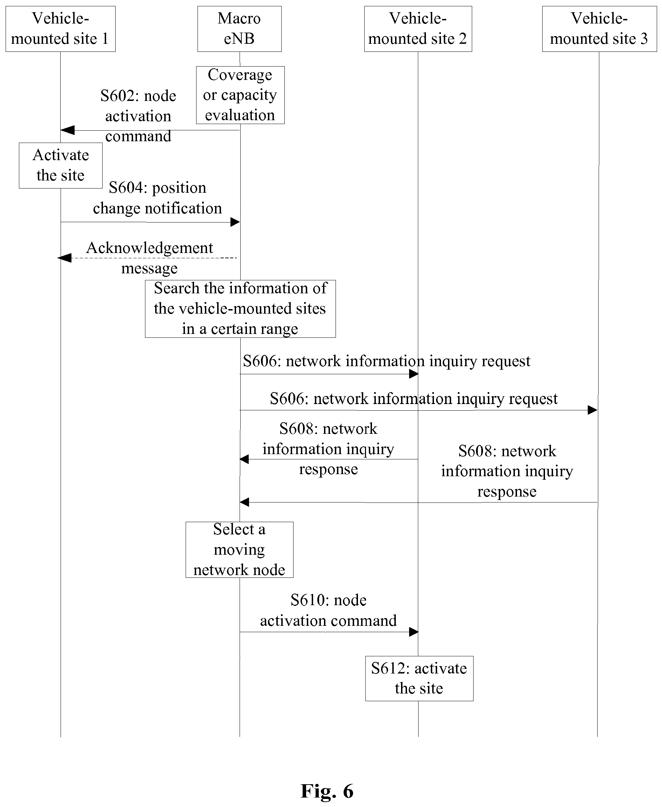

Fig. 6 is a flowchart illustrating the node reselection at an underlying network site performed when a moving network node moves according to an exemplary embodiment of the present disclosure. As shown in Fig. 6, the method may include the following acts S602 to S612.

At act S602, because it is needed to enhance the coverage or capacity in a service area, an underlying network site (e.g. a macro eNB) selects a moving network node (e.g. a vehicle-mounted site 1) to be activated and sends a node activation command.

The node activation command message may include, but is not limited to be: the operational parameter information of a moving network node, for example, the transmitting power, the running time and the movement area of a moving network node, where the running time indicates how long a moving network node is expected to run normally after receiving the node activation command from the underlying network site. The movement area is a position area in which the moving network node to be activated is expected to run normally after receiving the node activation command message. If the current position of the moving network node is not in the movement area, then the moving network node needs to notify the underlying network site.

At act S604, a moving network node (e.g. a vehicle-mounted site 1) provides capacity or coverage enhancement in the service area of the underlying network site. Because the mobility of the vehicle-mounted site 1 is non-periodic, when the vehicle-mounted site 1 moves out of the movement area, the vehicle-mounted site 1 sends a position change notification message to the macro eNB. The position change notification message is used to indicate that the changed position of the vehicle-mounted site 1 is outside of the movement area.

Optionally, the macro eNB sends an acknowledgement message (the dotted line shown in Fig. 6 represents optional information) to indicate that the position change notification message of the vehicle-mounted site 1 is received successfully.

At act S606, the macro eNB sends a network information inquiry request to one or more moving network nodes (e.g. vehicle-mounted sites 2 and 3) located in the service area of the macro eNB.

In an exemplary embodiment, the network information inquiry request message may refer to a search request sent by the underlying network site to acquire the network attribute information of a moving network node. The search request may include, but is not limited to be, at least one of:
(1) the position information of a moving network node;
(2) the tolerable residing time of the moving network node;
(3) the coverage range of the moving network node; and
(4) the wireless access information of the moving network node.

The position information of a moving network node may refer to information, for example, longitude and latitude information, which indicates a position where the moving network node currently resides.

The tolerable residing time of the moving network node indicates the time elapsing from the moment the moving network node receives an inquiry request from the underlying network site to the moment the moving network node leaves the current position.

The coverage range of a moving network node may refer to the maximum coverage distance the moving network node can provide when working at a current position and a specific transmitting power of the moving network node.

The wireless access information of the moving network node may refer to the type of an access network the moving network node can provide, for example, GSM, UMTS, LTE, LTE-A and WLAN.

At act S608, after receiving the network information inquiry request message from the macro eNB, the vehicle-mounted sites 2 and 3 send the position information, tolerable residing time, coverage range and wireless access information of the vehicle-mounted sites 2 and 3 to the macro eNB.

At act S610, the macro eNB may select the vehicle-mounted site 2 and/or the vehicle-mounted site 3 as service provider according to the service area provided by the vehicle-mounted site 1, and send a node activation command message to the vehicle-mounted site 2 and/or the vehicle-mounted site 3.

The node activation command message may include, but is not limited to be: the operational parameter information of a moving network node, for example, the transmitting power, the running time and the movement area of a moving network node, where the running time indicates how long a moving network node is expected to run normally after receiving the node activation command message from the underlying network site. The movement area is a position area in which the moving network node to be activated is expected to run normally after receiving the node activation command message. If the current position of the moving network node is not in the movement area, then the moving network node needs to notify the underlying network site of this situation.

At act S612, after receiving the node activation command message sent from the macro eNB, the vehicle-mounted site 2 and/or the vehicle-mounted site 3 performs/perform a corresponding operation according to the instruction included in the node activation command message.

### Fourth exemplary embodiment

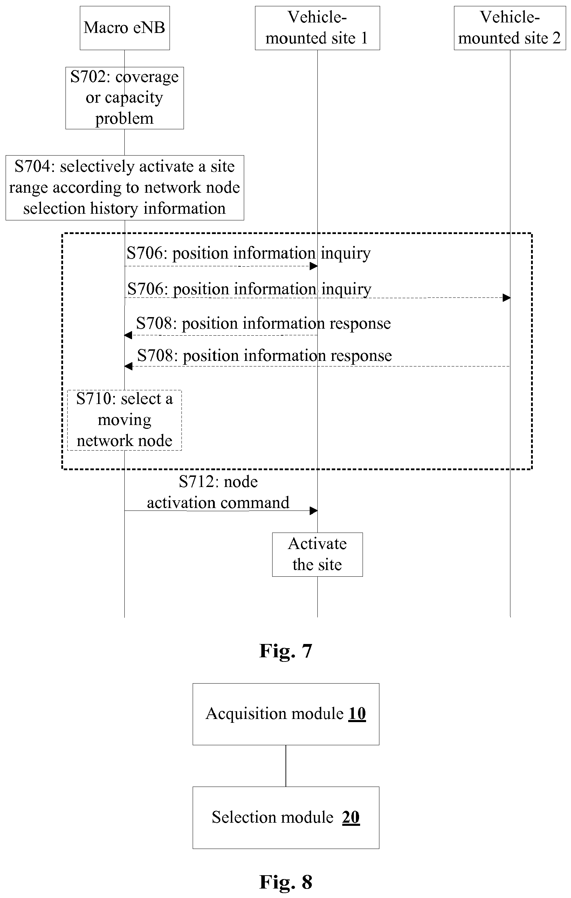

Fig. 7 is a flowchart illustrating the node selection at an underlying network site according to the network node selection history information of a moving network node provided in an exemplary embodiment of the present disclosure. As shown in Fig. 7, the method may include the following acts S702 to S712.

At act S702, an underlying network site, that is, a macro eNB, evaluates the capacity or coverage in the service area of the macro eNB according to the connection establishment information of affiliated terminals, for example, the number of the terminals connected with the underlying network site, or the number of the services requested by the terminals, and determines a position range where capacity enhancement or coverage expansion is needed.

At act S704, the macro eNB determines, according to the network node selection information of previously stored moving network nodes (e.g. vehicle-mounted sites 1 and 2), whether or not moving network nodes meet the current requirement on capacity or coverage enhancement;

In the exemplary embodiment, the network node selection information may include, but is not limited to be, at least one of:
(1) the node identification information of a moving network node;
(2) the position information of the moving network node;
(3) the tolerable residing time of the moving network node;
(4) the coverage range of the moving network node; and
(5) the wireless access information of the moving network node.

The node identification information of the moving network node may refer to the identifier of the moving network node (e.g. a vehicle-mounted site), for example, a NodeB ID1.

The position information of the moving network node may refer to information, for example, longitude and latitude information, which indicates a position where the moving network node currently resides.

The tolerable residing time of the moving network node indicates the time elapsing from the moment the moving network node initiatively sends network node selection information to the moment the moving network node leaves the current position.

The coverage range of a moving network node may refer to the maximum coverage distance the moving network node can provide when working at a current position and a maximum transmitting power of the moving network node.

The wireless access information of the moving network node may refer to the type of an access network the moving network node can provide, for example, GSM, UMTS, LTE, LTE-A and WLAN.

At act S706, the macro eNB determines whether or not the position of a moving network node is changed according to the time the moving network node stays at the current position, sends a node activation command to the moving network node if the position of the moving network node is not changed, or sends a position information inquiry message to the moving network node if the position of the moving network node is changed. The moving network node refers here to the vehicle-mounted site 1 and/or the vehicle-mounted site 2 in the service area.

At act S708, the vehicle-mounted site 1 and/or the vehicle-mounted site 2 receive/receives the position information inquiry message from the macro eNB and report/reports a position information response message to the macro eNB. The position information response message may include, but is not limited to be: the position information of the moving network node and the residing time of the moving network node.

At act S710, the macro eNB may determine a vehicle-mounted site capable of providing coverage or capacity enhancement according to the position information response message of the vehicle-mounted site 1 and/or that of the vehicle-mounted site 2, it is assumed here that the vehicle-mounted site 1 meets the foregoing condition.

At act S712, the macro eNB sends a node activation command message to the vehicle-mounted site 1 to activate the vehicle-mounted site 1, and then the vehicle-mounted site 1 starts running.

The node activation command message may include, but is not limited to be: the operational parameter information of a moving network node, for example, the transmitting power, the running time and the movement area of a moving network node, where the running time indicates how long a moving network node is expected to run normally after receiving the node activation command message from the underlying network site. The movement area is a position area in which the moving network node to be activated is expected to run normally after receiving the node activation command message. If the current position of the moving network node is not in the movement area, then the moving network node needs to notify the underlying network site of this situation.

Fig. 8 is a block diagram illustrating the structure of a network node selection apparatus according to an embodiment of the present disclosure. The network node selection apparatus which may be located at an underlying network site may include, as shown in Fig. 8, an acquisition module 10 arranged to acquire network node selection information of one or more moving network nodes, where the network node selection information is used for selecting a moving network node to be activated; and a selection module 20 arranged to select the moving network node to be activated from the one or more moving network nodes according to the network node information and send a node activation command message to the moving network node to be activated.

With the use of the method shown in Fig. 8, the problem that the selection of a proper moving network node is unachievable in a related communication technology is addressed. As a result, the resources of a moving network node are fully used, the stability of the moving network node is enhanced, the utilization rate of network resources is increased, and the coverage scale and the overall throughout of a network are increased.

In an exemplary implementation process, the one or more moving network nodes may be network sites changeable in position.

In an exemplary embodiment, the acquisition module 10 may be arranged to acquire the network node selection information of the one or more moving network nodes in one of the following two ways.

In a first way, the acquisition module is arranged to receive the network node selection information reported by one or more moving network nodes when the one or more moving network nodes are powered on.

In a second way, the acquisition module is arranged to send a network information inquiry request to the one or more moving network nodes and receive the network node selection information reported by the one or more moving network nodes according to the network information inquiry request.

In an exemplary embodiment, the network node selection information may include, but is not limited to be, at least one of:
(1) position information of the one or more moving network nodes, the position information may refer to information indicating a position where each moving network node currently resides;
(2) tolerable residing time of the one or more moving network nodes, where the tolerable residing time indicates time elapsing from a moment each moving network node receives a network information inquiry request to a moment the moving network node leaves a current position or time elapsing from a moment each moving network node initiatively sends the network node selection information to a moment the moving network node leaves a current position;
(3) coverage range of the one or more moving network nodes, where the coverage range may refer to the maximum coverage distance a moving network node can provide when working t the current position and a specific transmitting power or the maximum transmitting power;
(4) wireless access information of the one or more moving network nodes, where the wireless access information indicates a type of an access network which is able to be provided by each moving network node; and
(5) moving network node identification information of the one or more moving network nodes.

In an exemplary embodiment, operational parameter information of the moving network node to be activated may be carried in the node activation command message. The operational parameter information may include, but is not limited to be:
(1) transmitting power of the moving network node to be activated;
(2) running time of the moving network node to be activated, where the running time indicates how long the moving network node to be activated is expected to run normally after receiving the node activation command message; and
(3) a movement area of the moving network node to be activated, where the movement area is a position area in which the moving network node to be activated is expected to run normally after receiving the node activation command message.

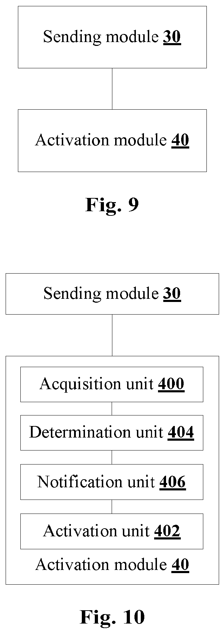

Fig. 9 is a block diagram illustrating the structure of a network node activation apparatus according to an embodiment of the present disclosure. The network node activation apparatus which may be located at a moving network node may include, as shown in Fig. 9, a sending module 30 arranged to send network node selection information to an underlying network site, where the network node selection information is used by the underlying network site for selecting a moving network node to be activated; and an activation module 40 arranged to receive a node activation command message from the underlying network site and perform an activating operation according to the node activation command message.

In an exemplary implementation process, the underlying network site may be a communication site which provides underlying network coverage and whose network site position keeps unchanged.

In an exemplary embodiment, the sending module 30 is arranged to send network node selection information to the underlying network site in one of the following two ways.

In a first way, the sending module is arranged to report, at a power-on moment, the network node selection information to the underlying network site.

In a second way, the sending module is arranged to report the network node selection information to the underlying network site in response to a network information inquiry request sent by the underlying network site.

In an exemplary embodiment, as shown in Fig. 10, the activation module 40 may include: an acquisition unit 400 arranged to acquire operational parameter information from the node activation command message, where the operational parameter information includes one or more of: transmitting power of the moving network node to be activated, running time of the moving network node to be activated, and a movement area of the moving network node to be activated; and an activation unit 402 arranged to activate the moving network node to be activated in the running time range using the transmitting power according to the operational parameter information.

In an exemplary embodiment, as shown in Fig. 10, the activation module 40 may further include: a determination unit 404 arranged to determine that a current position is outside of the movement area, where the movement area is a position area in which the moving network node to be activated is expected to run normally after receiving the node activation command message; and a notification unit 406 arranged to send a notification message to the underlying network site to notify the underlying network site that the current position is outside of the movement area.

It can be known from the foregoing description that the forgoing embodiments realize the following technical effects (it may be appreciated that these effects are achievable to some of exemplary embodiments). By adopting the technical solution provided in the embodiments of the present disclosure, an underlying network site acquires the network node selection information of moving network nodes within the coverage area of the underlying network site, selects a moving network node to be activated according to a requirement on network coverage and capacity and the positions and the service capability of the moving network nodes, and indicates the activating of the moving network node. With the use of a method of selecting a moving network node to be activated using an underlying network site, the resources of a moving network node are fully used, the stability of the moving network node is enhanced, the utilization rate of network resources is increased, and the coverage scale and the overall throughout of a network are increased.

Apparently, it should be appreciated by those skilled in the art that each module or act described in the disclosure can be realized by a universal computer and that the modules or acts may be integrated on a single computer or distributed on a network consisting of a plurality of computers, optionally, the modules or acts may be realized by executable program codes so that the modules or acts can be stored in a memory to be executed by a computer, and in some cases, the acts shown or described herein can be executed in a sequence different from this presented herein, or the modules or acts are formed into integrated circuit modules, or several of the modules or acts are formed into integrated circuit modules. Therefore, the disclosure is not limited to the combination of specific hardware and software.

Although certain exemplary embodiments of the disclosure have been described above, it should be appreciated that the exemplary embodiments are not described for limiting the disclosure and that a variety of modifications and variations can be devised by those of ordinary skill in the art. Any modification, substitute and improvement that can be devised by those of ordinary skill in the art without departing from the principle of the disclosure and that the modifications and improvements shall fall within the protection scope defined by the appended claims of the disclosure.

### Industrial Applicability

As stated above, the network node selection method and apparatus and the network node activation method and apparatus provided herein have the following beneficial effects. The resources of a moving network node are fully used, the stability of the moving network node is enhanced, the utilization rate of network resources is increased, and the coverage scale and the overall throughout of a network are increased.

## Claims

1. A network node selection method performed by an underlying network site, comprising:
acquiring network node selection information from one or more moving network nodes, wherein the network node selection information is used for selecting a moving network node to be activated (S202), and the network node selection information comprises at least one of:
tolerable residing time of the moving network node, wherein the tolerable residing time indicates time elapsing from a moment the moving network node receives a network information inquiry request to a moment the moving network node leaves a current position or time elapsing from a moment the moving network node initiatively sends the network node selection information to a moment the moving network node leaves a current position, wherein the network information inquiry request is a request sent by the underlying network site to the moving node to acquire the network node selection information;
coverage range of the moving network node, wherein the coverage range refers to a maximum coverage distance the moving network node is able to provide in a current position under a specific transmitting power or a maximum transmitting power; or
wireless access information of the moving network node, wherein the wireless access information indicates a type of an access network which is able to be provided by the moving network node; and
selecting a moving network node to be activated from the one or more moving network nodes according to the network node selection information and sending a node activation command message to the moving network node to be activated (S204).

2. The method as claimed in claim 1, wherein acquiring the network node selection information from the one or more moving network nodes (S202) comprises at least one of:
receiving the network node selection information reported by the one or more moving network nodes when the one or more moving network nodes are powered on; or
sending a network information inquiry request to the one or more moving network nodes and receiving the network node selection information reported by the one or more moving network nodes according to the network information inquiry request.

3. The method as claimed in claim 1 or 2, wherein the network node selection information further comprises:
moving network node identification information of the one or more moving network nodes.

4. The method as claimed in claim 1 or 2, wherein operational parameter information of the moving network node to be activated is carried in the node activation command message, and the operational parameter information comprises:
transmitting power of the moving network node to be activated;
running time of the moving network node to be activated, wherein the running time indicates how long the moving network node to be activated is expected to run normally after receiving the node activation command message; and
a movement area of the moving network node to be activated, wherein the movement area is a position area in which the moving network node to be activated is expected to run normally after receiving the node activation command message.

5. The method as claimed in any one of claims 1 to 4, wherein the underlying network site is a communication site which provides underlying network coverage and whose network site position keeps unchanged.

6. A network node activation method performed by a moving network node, comprising:
sending network node selection information to an underlying network site, wherein the network node selection information is used by the underlying network site for selecting a moving network node to be activated (S302), and the network node selection information comprises at least one of:
tolerable residing time of the moving network node, wherein the tolerable residing time indicates time elapsing from a moment the moving network node receives a network information inquiry request to a moment the moving network node leaves a current position or time elapsing from a moment the moving network node initiatively sends the network node selection information to a moment the moving network node leaves a current position, wherein the network information inquiry request is a request sent by the underlying network site to the moving node to acquire the network node selection information;
coverage range of the moving network node, wherein the coverage range refers to a maximum coverage distance the moving network node is able to provide in a current position under a specific transmitting power or a maximum transmitting power; or
wireless access information of the moving network node, wherein the wireless access information indicates a type of an access network which is able to be provided by the moving network node; and
receiving a node activation command message from the underlying network site and performing an activating operation according to the node activation command message (S304).

7. The method as claimed in claim 6, wherein sending the network node selection information to the underlying network site (S302) comprises one of:
reporting, at a power-on moment, the network node selection information to the underlying network site; or
reporting the network node selection information to the underlying network site in response to a network information inquiry request sent by the underlying network site.

8. The method as claimed in claim 6, wherein performing the activating operation according to the node activation command message (S304) comprises:
acquiring operational parameter information from the node activation command message, wherein the operational parameter information comprises one or more of: transmitting power of the moving network node to be activated, running time of the moving network node to be activated, and a movement area of the moving network node to be activated; and
activating the moving network node to be activated in the running time range using the transmitting power according to the operational parameter information;
wherein preferably, in a case where the operational parameter information comprises the movement area of the moving network node to be activated, after acquiring the operational parameter information from the node activation command message, the method further comprises:
determining that a current position is outside of the movement area, wherein the movement area is a position area in which the moving network node to be activated is expected to run normally after receiving the node activation command message; and
sending a notification message to the underlying network site to notify the underlying network site that the current position is outside of the movement area.

9. The method as claimed in any one of claims 6 to 8, wherein the moving network node is a network site changeable in position.

10. An underlying network site, comprising:
an acquisition module (10), arranged to acquire network node selection information from one or more moving network nodes, wherein the network node selection information is used for selecting a moving network node to be activated, and the network node selection information comprises at least one of:
tolerable residing time of the moving network node, wherein the tolerable residing time indicates time elapsing from a moment the moving network node receives a network information inquiry request to a moment the moving network node leaves a current position or time elapsing from a moment the moving network node initiatively sends the network node selection information to a moment the moving network node leaves a current position, wherein the network information inquiry request is a request sent by the underlying network site to the moving node to acquire the network node selection information;
coverage range of the moving network node, wherein the coverage range refers to a maximum coverage distance the moving network node is able to provide in a current position under a specific transmitting power or a maximum transmitting power; or
wireless access information of the moving network node, wherein the wireless access information indicates a type of an access network which is able to be provided by the moving network node; and
a selection module (20), arranged to select a moving network node to be activated from the one or more moving network nodes according to the network node information and send a node activation command message to the moving network node to be activated.

11. The underlying network site as claimed in claim 10, wherein the acquisition module (10) is arranged to acquire the network node selection information from the one or more moving network nodes in one of the following ways:
the acquisition module (10) is arranged to receive the network node selection information reported by the one or more moving network nodes when the one or more moving network nodes are powered on; or
the acquisition module (10) is arranged to send a network information inquiry request to the one or more moving network nodes and receive the network node selection information reported by the one or more moving network nodes according to the network information inquiry request.

12. The underlying network site as claimed in claim 10 or 11, wherein the network node selection information further comprises:
moving network node identification information of the one or more moving network nodes;
or,
operational parameter information of the moving network node to be activated is carried in the node activation command message, and the operational parameter information comprises:
transmitting power of the moving network node to be activated;
running time of the moving network node to be activated, wherein the running time indicates how long the moving network node to be activated is expected to run normally after receiving the node activation command message; and
a movement area of the moving network node to be activated, wherein the movement area is a position area in which the moving network node to be activated is expected to run normally after receiving the node activation command message.

13. A moving network node, comprising:
a sending module (30), arranged to send network node selection information to an underlying network site, wherein the network node selection information is used by the underlying network site for selecting a moving network node to be activated, and the network node selection information comprises at least one of:
tolerable residing time of the moving network node, wherein the tolerable residing time indicates time elapsing from a moment the moving network node receives a network information inquiry request to a moment the moving network node leaves a current position or time elapsing from a moment the moving network node initiatively sends the network node selection information to a moment the moving network node leaves a current position, wherein the network information inquiry request is a request sent by the underlying network site to the moving node to acquire the network node selection information;
coverage range of the moving network node, wherein the coverage range refers to a maximum coverage distance the moving network node is able to provide in a current position under a specific transmitting power or a maximum transmitting power; or
wireless access information of the moving network node, wherein the wireless access information indicates a type of an access network which is able to be provided by the moving network node; and
an activation module (40), arranged to receive a node activation command message from the underlying network site and perform an activating operation according to the node activation command message.

14. The moving network node as claimed in claim 13, wherein the sending module (30) is arranged to send the network node selection information to the underlying network site in one of the following ways:
the sending module (30) is arranged to report, at a power-on moment, the network node selection information to the underlying network site; or
the sending module (30) is arranged to report the network node selection information to the underlying network site in response to a network information inquiry request sent by the underlying network site.

15. The moving network node as claimed in claim 13, wherein the activation module (40) comprises:
an acquisition unit (400), arranged to acquire operational parameter information from the node activation command message, wherein the operational parameter information comprises one or more of: transmitting power of the moving network node to be activated, running time of the moving network node to be activated, and a movement area of the moving network node to be activated; and
an activation unit (402), arranged to activate the moving network node to be activated in the running time range using the transmitting power according to the operational parameter information;
wherein preferably, in a case where the operational parameter information comprises the movement area of the moving network node to be activated, the activation module (40) further comprises:
a determination unit (404), arranged to determine that a current position is outside of the movement area, wherein the movement area is a position area in which the moving network node to be activated is expected to run normally after receiving the node activation command message; and
a notification unit (406), arranged to send a notification message to the underlying network site to notify the underlying network site that the current position is outside of the movement area.

## Patentansprüche

1. Verfahren zur Netzwerkknotenauswahl, das von einer zugundeliegenden Netzwerkstelle ausgeführt wird, Folgendes umfassend:
Erfassen von Netzwerkknotenauswahlinformationen aus einem oder mehreren beweglichen Netzwerkknoten, wobei die Netzwerkknotenauswahlinformationen zum Auswählen eines zu aktivierenden (S202) beweglichen Netzwerkknotens verwendet werden, und die Netzwerkknotenauswahlinformationen mindestens eines umfassen aus:
einer vertretbaren Aufenthaltsdauer des beweglichen Netzwerkknotens, wobei die vertretbare Aufenthaltsdauer eine Dauer angibt, die von einem Zeitpunkt, zu dem der Netzwerkknoten eine Netzwerkinformationsanfrage empfängt, bis zu einem Zeitpunkt, zu dem der Netzwerkknoten eine aktuelle Position verlässt, verstreicht, oder eine Dauer, die von einem Zeitpunkt, zu dem der bewegliche Netzwerkknoten initiativ die Netzwerkknotenauswahlinformationen sendet, bis zu einem Zeitpunkt, zu dem der Netzwerkknoten eine aktuelle Position verlässt, verstreicht, wobei die Netzwerkinformationsanfrage eine Anfrage ist, die von der zugundeliegenden Netzwerkstelle an den beweglichen Knoten gesendet wird, um die Netzwerkknotenauswahlinformationen zu erfassen;
einen Abdeckungsbereich des beweglichen Netzwerkknotens, wobei sich der Abdeckungsbereich auf eine maximale Abdeckungsdistanz bezieht, die der bewegliche Netzwerkknoten in einer aktuellen Position unter einer speziellen Übertragungsleistung oder einer maximalen Übertragungsleistung bereitzustellen in der Lage ist; oder
Informationen über drahtlosen Zugriff des beweglichen Netzwerkknotens, wobei die Informationen über drahtlosen Zugriff einen Typ eines Zugriffsnetzwerks angeben, das in der Lage ist, von dem beweglichen Netzwerkknoten bereitgestellt zu werden; und
Auswählen eines zu aktivierenden beweglichen Netzwerkknotens von dem einen oder mehreren beweglichen Netzwerkknoten entsprechend den Netzwerkknotenauswahlinformationen und Senden einer Knotenaktivierungsbefehlsnachricht an den zu aktivierenden (S204) beweglichen Netzwerkknoten.

2. Verfahren nach Anspruch 1, wobei Erfassen der Netzwerkknotenauswahlinformationen aus einem oder mehreren beweglichen Netzwerkknoten (S202) mindestens eines umfasst aus:
Empfangen der Netzwerkknotenauswahlinformationen, die durch den einen oder mehrere bewegliche Netzwerkknoten berichtet werden, wenn der eine oder mehrere bewegliche Netzwerkknoten eingeschaltet sind;
oder
Senden einer Netzwerkinformationsanfrage an den einen oder mehrere bewegliche Netzwerkknoten und Empfangen der Netzwerkknotenauswahlinformationen, die durch den einen oder mehrere bewegliche Netzwerkknoten entsprechend der Netzwerkinformationsanfrage berichtet werden.

3. Verfahren nach Anspruch 1 oder 2, wobei die Netzwerkknotenauswahlinformationen weiter umfassen:
Identifikationsinformationen eines beweglichen Netzwerkknotens des einen oder mehrerer beweglicher Netzwerkknoten.

4. Verfahren nach Anspruch 1 oder 2, wobei Betriebsparameterinformationen des zu aktivierenden beweglichen Netzwerkknotens in der Knotenaktivierungsbefehlsnachricht getragen werden, und die Betriebsparameterinformationen Folgendes umfassen:
Übertragungsleistung des zu aktivierenden beweglichen Netzwerkknotens;
Laufzeit des zu aktivierenden beweglichen Netzwerkknotens, wobei die Laufzeit angibt, wie lange erwartet wird, dass der zu aktivierende bewegliche Netzwerkknoten nach Empfangen der Knotenaktivierungsbefehlsnachricht normal läuft; und
einen Bewegungsbereich des zu aktivierenden beweglichen Netzwerkknotens, wobei der Bewegungsbereich ein Positionsbereich ist, in dem erwartet wird, dass der zu aktivierende bewegliche Netzwerkknoten nach Empfangen der Knotenaktivierungsbefehlsnachricht normal läuft.

5. Verfahren nach einem der Ansprüche 1 bis 4, wobei die zugrundeliegende Netzwerkstelle eine Kommunikationsstelle ist, die zugrundeliegende Netzwerkabdeckung bereitstellt, und deren Netzwerkstellenposition unverändert bleibt.

6. Verfahren zur Netzwerkknotenaktivierung, das von einem beweglichen Netzwerkknoten ausgeführt wird, umfassend:
Senden von Netzwerkknotenauswahlinformationen an eine zugrundeliegende Netzwerkstelle, wobei die Netzwerkknotenauswahlinformationen durch die zugrundeliegende Netzwerkstelle zum Auswählen eines zu aktivierenden (S302) beweglichen Netzwerkknotens verwendet werden, und die Netzwerkknotenauswahlinformationen mindestens eines umfassen aus:
einer vertretbaren Aufenthaltsdauer des beweglichen Netzwerkknotens, wobei die vertretbare Aufenthaltsdauer eine Dauer angibt, die von einem Zeitpunkt, zu dem der Netzwerkknoten eine Netzwerkinformationsanfrage empfängt, bis zu einem Zeitpunkt, zu dem der Netzwerkknoten eine aktuelle Position verlässt, verstreicht, oder eine Dauer, die von einem Zeitpunkt, zu dem der bewegliche Netzwerkknoten initiativ die Netzwerkknotenauswahlinformationen sendet, bis zu einem Zeitpunkt, zu dem der Netzwerkknoten eine aktuelle Position verlässt, verstreicht, wobei die Netzwerkinformationsanfrage eine Anfrage ist, die durch die zugundeliegende Netzwerkstelle an den beweglichen Knoten gesendet wird, um die Netzwerkknotenauswahlinformationen zu erfassen;
einen Abdeckungsbereich des beweglichen Netzwerkknotens, wobei sich der Abdeckungsbereich auf eine maximale Abdeckungsdistanz bezieht, die der bewegliche Netzwerkknoten in einer aktuellen Position unter einer speziellen Übertragungsleistung oder einer maximalen Übertragungsleistung bereitzustellen in der Lage ist; oder
Informationen über drahtlosen Zugriff des beweglichen Netzwerkknotens, wobei die Informationen über drahtlosen Zugriff einen Typ eines Zugriffsnetzwerks angeben, das in der Lage ist, von dem beweglichen Netzwerkknoten bereitgestellt zu werden; und
Empfangen einer Knotenaktivierungsbefehlsnachricht von der zugrundeliegenden Netzwerkstelle und Durchführen eines Aktivierungsvorgangs entsprechend der Knotenaktivierungsbefehlsnachricht (S304).

7. Verfahren nach Anspruch 6, wobei Senden von Netzwerkknotenauswahlinformationen an die zugrundeliegende Netzwerkstelle (S302) eines umfasst aus:
Berichten, zu einem Einschaltzeitpunkt, der Netzwerkknotenauswahlinformationen an die zugrundeliegende Netzwerkstelle; oder
Berichten der Netzwerkknotenauswahlinformationen an die zugrundeliegende Netzwerkstelle als Reaktion auf eine von der zugrundeliegenden Netzwerkstelle gesendeten Netzwerkinformationsanfrage.

8. Verfahren nach Anspruch 6, wobei Durchführen des Aktivierungsvorgangs entsprechend der Knotenaktivierungsbefehlsnachricht (S304) Folgendes umfasst:
Erfassen von Betriebsparameterinformationen aus der Knotenaktivierungsbefehlsnachricht, wobei die Betriebsparameterinformationen eines oder mehr umfassen aus:
Übertragungsleistung des zu aktivierenden beweglichen Netzwerkknotens, Laufzeit des zu aktivierenden beweglichen Netzwerkknotens und Bewegungsbereich des zu aktivierenden beweglichen Netzwerkknotens; und
Aktivieren des zu aktivierenden beweglichen Netzwerkknotens in dem Laufzeitbereich unter Verwendung der Übertragungsleistung entsprechend den Betriebsparameterinformationen;
wobei das Verfahren in einem Fall, in dem die Betriebsparameterinformationen den Bewegungsbereich des zu aktivierenden beweglichen Netzwerkknotens umfassen, nach dem Erfassen der Betriebsparameterinformationen aus der Knotenaktivierungsbefehlsnachricht vorzugsweise weiter Folgendes umfasst:
Bestimmen, dass eine aktuelle Position außerhalb des Bewegungsbereichs liegt, wobei der Bewegungsbereich ein Positionsbereich ist, in dem erwartet wird, dass der zu aktivierende bewegliche Netzwerkknoten nach Empfangen der Knotenaktivierungsbefehlsnachricht normal läuft;
und
Senden einer Mitteilungsnachricht an die zugrundeliegende Netzwerkstelle, um der zugrundeliegenden Netzwerkstelle mitzuteilen, dass die aktuelle Position außerhalb des Bewegungsbereichs liegt.

9. Verfahren nach einem der Ansprüche 6 bis 8, wobei der bewegliche Netzwerkknoten eine positionsveränderliche Netzwerkstelle ist.

10. Zugrundeliegende Netzwerkstelle, umfassend:
ein Erfassungsmodul (10), das angeordnet ist, um Netzwerkknotenauswahlinformationen aus einem oder mehreren beweglichen Netzwerkknoten zu erfassen, wobei die Netzwerkknotenauswahlinformationen zum Auswählen eines zu aktivierenden beweglichen Netzwerkknotens verwendet werden, und die Netzwerkknotenauswahlinformationen mindestens eines umfassen aus:
einer vertretbaren Aufenthaltsdauer des beweglichen Netzwerkknotens, wobei die vertretbare Aufenthaltsdauer eine Dauer angibt, die von einem Zeitpunkt, zu dem der Netzwerkknoten eine Netzwerkinformationsanfrage empfängt, bis zu einem Zeitpunkt, zu dem der Netzwerkknoten eine aktuelle Position verlässt, verstreicht, oder eine Dauer, die von einem Zeitpunkt, zu dem der bewegliche Netzwerkknoten initiativ die Netzwerkknotenauswahlinformationen sendet, bis zu einem Zeitpunkt, zu dem der Netzwerkknoten eine aktuelle Position verlässt, verstreicht, wobei die Netzwerkinformationsanfrage eine Anfrage ist, die von der zugundeliegenden Netzwerkstelle an den beweglichen Knoten gesendet wird, um die Netzwerkknotenauswahlinformationen zu erfassen;
einen Abdeckungsbereich des beweglichen Netzwerkknotens, wobei sich der Abdeckungsbereich auf eine maximale Abdeckungsdistanz bezieht, die der bewegliche Netzwerkknoten in einer aktuellen Position unter einer speziellen Übertragungsleistung oder einer maximalen Übertragungsleistung bereitzustellen in der Lage ist; oder
Informationen über drahtlosen Zugriff des beweglichen Netzwerkknotens, wobei die Informationen über drahtlosen Zugriff einen Typ eines Zugriffsnetzwerks angeben, das in der Lage ist, von dem beweglichen Netzwerkknoten bereitgestellt zu werden; und
ein Auswahlmodul (20), das angeordnet ist, um einen zu aktivierenden beweglichen Netzwerkknoten von dem einen oder mehreren beweglichen Netzwerkknoten entsprechend den Netzwerkknotenauswahlinformationen auszuwählen, und eine Knotenaktivierungsbefehlsnachricht an den zu aktivierenden beweglichen Netzwerkknoten zu senden.

11. Zugrundeliegende Netzwerkstelle nach Anspruch 10, wobei das Erfassungsmodul (10) angeordnet ist, um die Netzwerkknotenauswahlinformationen aus dem einen oder mehreren beweglichen Netzwerkknoten auf eine der folgenden Arten zu erfassen:
das Erfassungsmodul (10) ist angeordnet, um die Netzwerkknotenauswahlinformationen, die von dem einen oder mehreren beweglichen Netzwerkknoten berichtet werden, zu empfangen, wenn der eine oder mehrere bewegliche Netzwerkknoten eingeschaltet sind;
oder
das Erfassungsmodul (10) ist angeordnet, um eine Netzwerkinformationsanfrage an den einen oder mehrere bewegliche Netzwerkknoten zu senden und die Netzwerkknotenauswahlinformationen, die durch den einen oder mehrere bewegliche Netzwerkknoten entsprechend der Netzwerkinformationsanfrage berichtet werden, zu empfangen.

12. Zugrundeliegende Netzwerkstelle nach Anspruch 10 oder 11, wobei
die Netzwerkknotenauswahlinformationen weiter umfassen:
Identifikationsinformationen eines beweglichen Netzwerkknotens des einen oder mehrerer beweglicher Netzwerkknoten;
oder,
Betriebsparameterinformationen des zu aktivierenden beweglichen Netzwerkknotens in der Knotenaktivierungsbefehlsnachricht getragen werden, und die Betriebsparameterinformationen Folgendes umfassen:
Übertragungsleistung des zu aktivierenden beweglichen Netzwerkknotens;
Laufzeit des zu aktivierenden beweglichen Netzwerkknotens, wobei die Laufzeit angibt, wie lange erwartet wird, dass der zu aktivierende bewegliche Netzwerkknoten nach Empfangen der Knotenaktivierungsbefehlsnachricht normal läuft; und
einen Bewegungsbereich des zu aktivierenden beweglichen Netzwerkknotens, wobei der Bewegungsbereich ein Positionsbereich ist, in dem erwartet wird, dass der zu aktivierende bewegliche Netzwerkknoten nach Empfangen der Knotenaktivierungsbefehlsnachricht normal läuft.

13. Beweglicher Netzwerkknoten, umfassend:
ein Sendemodul (30), das angeordnet ist, um Netzwerkknotenauswahlinformationen an eine zugrundeliegende Netzwerkstelle zu senden, wobei die Netzwerkknotenauswahlinformationen von der zugrundeliegenden Netzwerkstelle zum Auswählen eines zu aktivierenden beweglichen Netzwerkknotens verwendet werden, und die Netzwerkknotenauswahlinformationen mindestens eines umfassen aus:
einer vertretbaren Aufenthaltsdauer des beweglichen Netzwerkknotens, wobei die vertretbare Aufenthaltsdauer eine Dauer angibt, die von einem Zeitpunkt, zu dem der Netzwerkknoten eine Netzwerkinformationsanfrage empfängt, bis zu einem Zeitpunkt, zu dem der Netzwerkknoten eine aktuelle Position verlässt, verstreicht, oder eine Dauer, die von einem Zeitpunkt, zu dem der bewegliche Netzwerkknoten initiativ die Netzwerkknotenauswahlinformationen sendet, bis zu einem Zeitpunkt, zu dem der Netzwerkknoten eine aktuelle Position verlässt, verstreicht, wobei die Netzwerkinformationsanfrage eine Anfrage ist, die von der zugundeliegenden Netzwerkstelle an den beweglichen Knoten gesendet wird, um die Netzwerkknotenauswahlinformationen zu erfassen;
einen Abdeckungsbereich des beweglichen Netzwerkknotens, wobei sich der Abdeckungsbereich auf eine maximale Abdeckungsdistanz bezieht, die der bewegliche Netzwerkknoten in einer aktuellen Position unter einer speziellen Übertragungsleistung oder einer maximalen Übertragungsleistung bereitzustellen in der Lage ist; oder
Informationen über drahtlosen Zugriff des beweglichen Netzwerkknotens, wobei die Informationen über drahtlosen Zugriff einen Typ eines Zugriffsnetzwerks angeben, das in der Lage ist, von dem beweglichen Netzwerkknoten bereitgestellt zu werden; und
ein Aktivierungsmodul (40), das angeordnet ist, um eine Knotenaktivierungsbefehlsnachricht von der zugrundeliegenden Netzwerkstelle zu empfangen und einen Aktivierungsvorgang entsprechend der Knotenaktivierungsbefehlsnachricht durchzuführen.

14. Beweglicher Netzwerkknoten nach Anspruch 13, wobei das Sendemodul (30) angeordnet ist, um die Netzwerkknotenauswahlinformationen an die zugrundeliegende Netzwerkstelle auf eine der folgenden Arten zu senden:
das Sendemodul (30) ist angeordnet, um zu einem Einschaltzeitpunkt, die Netzwerkknotenauswahlinformationen an die zugrundeliegende Netzwerkstelle zu berichten; oder
das Sendemodul (30) ist angeordnet, um die Netzwerkknotenauswahlinformationen an die zugrundeliegende Netzwerkstelle als Reaktion auf eine durch die zugrundeliegende Netzwerkstelle gesendeten Netzwerkinformationsanfrage zu berichten.

15. Beweglicher Netzwerkknoten nach Anspruch 13, wobei das Aktivierungsmodul (40) umfasst:
eine Erfassungseinheit (400), die angeordnet ist, um Betriebsparameterinformationen aus der Knotenaktivierungsbefehlsnachricht zu erfassen, wobei die Betriebsparameterinformationen eines oder mehr umfassen aus: Übertragungsleistung des zu aktivierenden beweglichen Netzwerkknotens, Laufzeit des zu aktivierenden beweglichen Netzwerkknotens und Bewegungsbereich des zu aktivierenden beweglichen Netzwerkknotens; und
eine Aktivierungseinheit (402), die angeordnet ist, um den zu aktivierenden beweglichen Netzwerkknoten im Laufzeitbereich unter Verwendung der Übertragungsleistung entsprechend den Betriebsparameterinformationen zu aktivieren;
wobei das Aktivierungsmodul (40) in einem Fall, in dem die Betriebsparameterinformationen den Bewegungsbereich des zu aktivierenden beweglichen Netzwerkknotens umfassen, weiter Folgendes umfasst:
eine Bestimmungseinheit (404), die angeordnet ist, um zu bestimmen, dass eine aktuelle Position außerhalb des Bewegungsbereichs liegt, wobei der Bewegungsbereich ein Positionsbereich ist, in dem erwartet wird, dass der zu aktivierende bewegliche Netzwerkknoten nach Empfangen der Knotenaktivierungsbefehlsnachricht normal läuft; und
eine Mitteilungseinheit (406), die angeordnet ist, um eine Mitteilungsnachricht an die zugrundeliegende Netzwerkstelle zu senden, um der zugrundeliegenden Netzwerkstelle mitzuteilen, dass die aktuelle Position außerhalb des Bewegungsbereichs liegt.

## Revendications

1. Procédé de sélection de nœud de réseau réalisé par un site de réseau sous-jacent, comprenant :
l'acquisition d'informations de sélection de nœud de réseau à partir d'un ou plusieurs nœuds de réseau mobiles, dans lequel les informations de sélection de nœud de réseau sont utilisées pour la sélection d'un nœud de réseau mobile à activer (S202), et les informations de sélection de nœud de réseau comprennent au moins un parmi :
un temps de séjour tolérable du nœud de réseau mobile, dans lequel le temps de séjour tolérable indique un temps s'écoulant d'un moment où le nœud de réseau mobile reçoit une demande d'interrogation d'informations de réseau à un moment où le nœud de réseau mobile quitte une position actuelle ou un temps s'écoulant d'un moment où le nœud de réseau mobile envoie de manière initiative les informations de sélection de nœud de réseau à un moment où le nœud de réseau mobile quitte une position actuelle, dans lequel la demande d'interrogation d'informations de réseau est une demande envoyée par le site de réseau sous-jacent au nœud mobile pour acquérir les informations de sélection de nœud de réseau ;
une plage de couverture du nœud de réseau mobile, dans lequel la plage de couverture se réfère à une distance de couverture maximale que le nœud de réseau mobile est capable de fournir dans une position actuelle avec une puissance de transmission spécifique ou une puissance de transmission maximale ; ou
des informations d'accès sans fil du nœud de réseau mobile, dans lequel les informations d'accès sans fil indiquent un type d'un réseau d'accès qui peut être fourni par le nœud de réseau mobile ; et
la sélection d'un nœud de réseau mobile à activer à partir des un ou plusieurs nœuds de réseau mobiles en fonction des informations de sélection de nœud de réseau et l'envoi d'un message de commande d'activation de nœud au nœud de réseau mobile à activer (S204).

2. Procédé selon la revendication 1, dans lequel l'acquisition des informations de sélection de nœud de réseau à partir des un ou plusieurs nœuds de réseau mobiles (S202) comprend au moins un parmi :
la réception des informations de sélection de nœud de réseau rapportées par les un ou plusieurs nœuds de réseau mobiles quand les un ou plusieurs nœuds de réseau mobiles sont mis sous tension ; ou
l'envoi d'une demande d'interrogation d'informations de réseau aux un ou plusieurs nœuds de réseau mobiles et la réception des informations de sélection de nœud de réseau rapportées par les un ou plusieurs nœuds de réseau mobiles en fonction de la demande d'interrogation d'informations de réseau.

3. Procédé selon la revendication 1 ou 2, dans lequel les informations de sélection de nœud de réseau comprennent en outre :
des informations d'identification de nœud de réseau mobile des un ou plusieurs nœuds de réseau mobiles.

4. Procédé selon la revendication 1 ou 2, dans lequel des informations de paramètre de fonctionnement du nœud de réseau mobile à activer sont transportées dans le message de commande d'activation de nœud, et les informations de paramètre de fonctionnement comprennent :
une puissance de transmission du nœud de réseau mobile à activer ;
un temps de fonctionnement du nœud de réseau mobile à activer, dans lequel le temps de fonctionnement indique combien de temps le nœud de réseau mobile à activer est supposé fonctionner normalement après la réception du message de commande d'activation de nœud ; et
une zone de mouvement du nœud de réseau mobile à activer, dans lequel la zone de mouvement est une zone de position dans laquelle le nœud de réseau mobile à activer est supposé fonctionner normalement après la réception du message de commande d'activation de nœud.

5. Procédé selon l'une quelconque des revendications 1 à 4, dans lequel le site de réseau sous-jacent est un site de communication qui fournit une couverture de réseau sous-jacent et dont la position de site de réseau reste inchangée.

6. Procédé d'activation de nœud de réseau réalisé par un nœud de réseau mobile, comprenant :
l'envoi d'informations de sélection de nœud de réseau à un site de réseau sous-jacent, dans lequel les informations de sélection de nœud de réseau sont utilisées par le site de réseau sous-jacent pour la sélection d'un nœud de réseau mobile à activer (S302), et les informations de sélection de nœud de réseau comprennent au moins un parmi :
un temps de séjour tolérable du nœud de réseau mobile, dans lequel le temps de séjour tolérable indique un temps s'écoulant d'un moment où le nœud de réseau mobile reçoit une demande d'interrogation d'informations de réseau à un moment où le nœud de réseau mobile quitte une position actuelle ou un temps s'écoulant d'un moment où le nœud de réseau mobile envoie de manière initiative les informations de sélection de nœud de réseau à un moment où le nœud de réseau mobile quitte une position actuelle, dans lequel la demande d'interrogation d'informations de réseau est une demande envoyée par le site de réseau sous-jacent au nœud mobile pour acquérir les informations de sélection de nœud de réseau ;
une plage de couverture du nœud de réseau mobile, dans lequel la plage de couverture se réfère à une distance de couverture maximale que le nœud de réseau mobile est capable de fournir dans une position actuelle avec une puissance de transmission spécifique ou une puissance de transmission maximale ; ou
des informations d'accès sans fil du nœud de réseau mobile, dans lequel les informations d'accès sans fil indiquent un type d'un réseau d'accès qui peut être fourni par le nœud de réseau mobile ; et
la réception d'un message de commande d'activation de nœud à partir du site de réseau sous-jacent et l'exécution d'une opération d'activation en fonction du message de commande d'activation de nœud (S304).

7. Procédé selon la revendication 6, dans lequel l'envoi des informations de sélection de nœud de réseau au site de réseau sous-jacent (S302) comprend un parmi :
le rapport, à un moment de mise sous tension, des informations de sélection de nœud de réseau au site de réseau sous-jacent ; ou
le rapport des informations de sélection de nœud de réseau au site de réseau sous-jacent en réponse à une demande d'interrogation d'informations de réseau envoyée par le site de réseau sous-jacent.

8. Procédé selon la revendication 6, dans lequel l'exécution de l'opération d'activation en fonction du message de commande d'activation de nœud (S304) comprend :
l'acquisition d'informations de paramètre de fonctionnement à partir du message de commande d'activation de nœud, dans lequel les informations de paramètre de fonctionnement comprennent un ou plusieurs parmi : une puissance de transmission du nœud de réseau mobile à activer, un temps de fonctionnement du nœud de réseau mobile à activer et une zone de mouvement du nœud de réseau mobile à activer ; et
l'activation du nœud de réseau mobile à activer dans la plage de temps de fonctionnement en utilisant la puissance de transmission en fonction des informations de paramètre de fonctionnement ;
dans lequel de préférence, dans un cas où les informations de paramètre de fonctionnement comprennent la zone de mouvement du nœud de réseau mobile à activer, après l'acquisition des informations de paramètre de fonctionnement à partir du message de commande d'activation de nœud, le procédé comprend en outre :
la détermination qu'une position actuelle est à l'extérieur de la zone de mouvement, dans lequel la zone de mouvement est une zone de position dans laquelle le nœud de réseau mobile à activer est supposé fonctionner normalement après la réception du message de commande d'activation de nœud ; et
l'envoi d'un message de notification au site de réseau sous-jacent pour notifier au site de réseau sous-jacent que la position actuelle est à l'extérieur de la zone de mouvement.

9. Procédé selon l'une quelconque des revendications 6 à 8, dans lequel le nœud de réseau mobile est un site de réseau pouvant changer de position.

10. Site de réseau sous-jacent, comprenant :
un module d'acquisition (10) agencé pour acquérir des informations de sélection de nœud de réseau à partir d'un ou plusieurs nœuds de réseau mobiles, dans lequel les informations de sélection de nœud de réseau sont utilisées pour la sélection d'un nœud de réseau mobile à activer, et les informations de sélection de nœud de réseau comprennent au moins un parmi :
un temps de séjour tolérable du nœud de réseau mobile, dans lequel le temps de séjour tolérable indique un temps s'écoulant d'un moment où le nœud de réseau mobile reçoit une demande d'interrogation d'informations de réseau à un moment où le nœud de réseau mobile quitte une position actuelle ou un temps s'écoulant d'un moment où le nœud de réseau mobile envoie de manière initiative les informations de sélection de nœud de réseau à un moment où le nœud de réseau mobile quitte une position actuelle, dans lequel la demande d'interrogation d'informations de réseau est une demande envoyée par le site de réseau sous-jacent au nœud mobile pour acquérir les informations de sélection de nœud de réseau ;
une plage de couverture du nœud de réseau mobile, dans lequel la plage de couverture se réfère à une distance de couverture maximale que le nœud de réseau mobile est capable de fournir dans une position actuelle avec une puissance de transmission spécifique ou une puissance de transmission maximale ; ou
des informations d'accès sans fil du nœud de réseau mobile, dans lequel les informations d'accès sans fil indiquent un type d'un réseau d'accès qui peut être fourni par le nœud de réseau mobile ; et
un module de sélection (20) agencé pour sélectionner un nœud de réseau mobile à activer à partir des un ou plusieurs nœuds de réseau mobiles en fonction des informations de nœud de réseau et envoyer un message de commande d'activation de nœud au nœud de réseau mobile à activer.

11. Site de réseau sous-jacent selon la revendication 10, dans lequel le module d'acquisition (10) est agencé pour acquérir les informations de sélection de nœud de réseau à partir des un ou plusieurs nœuds de réseau mobiles d'une des manières suivantes :
le module d'acquisition (10) est agencé pour recevoir les informations de sélection de nœud de réseau rapportées par les un ou plusieurs nœuds de réseau mobiles quand les un ou plusieurs nœuds de réseau mobiles sont mis sous tension ; ou
le module d'acquisition (10) est agencé pour envoyer une demande d'interrogation d'informations de réseau aux un ou plusieurs nœuds de réseau mobiles et recevoir les informations de sélection de nœud de réseau rapportées par les un ou plusieurs nœuds de réseau mobiles en fonction de la demande d'interrogation d'informations de réseau.

12. Site de réseau sous-jacent selon la revendication 10 ou 11, dans lequel
les informations de sélection de nœud de réseau comprennent en outre :
des informations d'identification de nœud de réseau mobile des un ou plusieurs nœuds de réseau mobiles ;
ou
des informations de paramètre de fonctionnement du nœud de réseau mobile à activer sont transportées dans le message de commande d'activation de nœud, et les informations de paramètre de fonctionnement comprennent :
une puissance de transmission du nœud de réseau mobile à activer ;
un temps de fonctionnement du nœud de réseau mobile à activer, dans lequel le temps de fonctionnement indique combien de temps le nœud de réseau mobile à activer est supposé fonctionner normalement après la réception du message de commande d'activation de nœud ; et
une zone de mouvement du nœud de réseau mobile à activer, dans lequel la zone de mouvement est une zone de position dans laquelle le nœud de réseau mobile à activer est supposé fonctionner normalement après la réception du message de commande d'activation de nœud.

13. Nœud de réseau mobile comprenant :
un module d'envoi (30) agencé pour envoyer des informations de sélection de nœud de réseau à un site de réseau sous-jacent, dans lequel les informations de sélection de nœud de réseau sont utilisées par le site de réseau sous-jacent pour la sélection d'un nœud de réseau mobile à activer, et les informations de sélection de nœud de réseau comprennent au moins un parmi :
un temps de séjour tolérable du nœud de réseau mobile, dans lequel le temps de séjour tolérable indique un temps s'écoulant d'un moment où le nœud de réseau mobile reçoit une demande d'interrogation d'informations de réseau à un moment où le nœud de réseau mobile quitte une position actuelle ou un temps s'écoulant d'un moment où le nœud de réseau mobile envoie de manière initiative les informations de sélection de nœud de réseau à un moment où le nœud de réseau mobile quitte une position actuelle, dans lequel la demande d'interrogation d'informations de réseau est une demande envoyée par le site de réseau sous-jacent au nœud mobile pour acquérir les informations de sélection de nœud de réseau ;
une plage de couverture du nœud de réseau mobile, dans lequel la plage de couverture se réfère à une distance de couverture maximale que le nœud de réseau mobile est capable de fournir dans une position actuelle avec une puissance de transmission spécifique ou une puissance de transmission maximale ; ou
des informations d'accès sans fil du nœud de réseau mobile, dans lequel les informations d'accès sans fil indiquent un type d'un réseau d'accès qui peut être fourni par le nœud de réseau mobile ; et
un module d'activation (40) agencé pour recevoir un message de commande d'activation de nœud à partir du site de réseau sous-jacent et réaliser une opération d'activation en fonction du message de commande d'activation de nœud.

14. Nœud de réseau mobile selon la revendication 13, dans lequel le module d'envoi (30) est agencé pour envoyer les informations de sélection de nœud de réseau au site de réseau sous-jacent d'une des manières suivantes :
le module d'envoi (30) est agencé pour rapporter, à un moment de mise sous tension, les informations de sélection de nœud de réseau au site de réseau sous-jacent ; ou
le module d'envoi (30) est agencé pour rapporter les informations de sélection de nœud de réseau au site de réseau sous-jacent en réponse à une demande d'interrogation d'informations de réseau envoyée par le site de réseau sous-jacent.

15. Nœud de réseau mobile selon la revendication 13, dans lequel le module d'activation (40) comprend :
une unité d'acquisition (400), agencée pour acquérir des informations de paramètre de fonctionnement à partir du message de commande d'activation de nœud, dans lequel les informations de paramètre de fonctionnement comprennent un ou plusieurs parmi : une puissance de transmission du nœud de réseau mobile à activer, un temps de fonctionnement du nœud de réseau mobile à activer et une zone de mouvement du nœud de réseau mobile à activer ; et
une unité d'activation (402), agencée pour activer le nœud de réseau mobile à activer dans la plage de temps de fonctionnement en utilisant la puissance de transmission en fonction des informations de paramètre de fonctionnement ;
dans lequel de préférence, dans un cas où les informations de paramètre de fonctionnement comprennent la zone de mouvement du nœud de réseau mobile à activer, le module d'activation (40) comprend en outre :
une unité de détermination (404), agencée pour déterminer qu'une position actuelle est à l'extérieur de la zone de mouvement, dans lequel la zone de mouvement est une zone de position dans laquelle le nœud de réseau mobile à activer est supposé fonctionner normalement après la réception du message de commande d'activation de nœud ; et
une unité de notification (406), agencée pour envoyer un message de notification au site de réseau sous-jacent pour notifier au site de réseau sous-jacent que la position actuelle est à l'extérieur de la zone de mouvement.
